# FASCICULE DE BREVET EUROPEEN

(11) **EP 1 903 094 B1**
(45) Date de publication et mention de la délivrance du brevet: **24.03.2010**
(21) Numéro de dépôt: 07116827.2
(22) Date de dépôt: 20.09.2007
(51) Int. Cl.: C11B 1/06, B30B 9/06, A23N 1/02

(54) **Appareil servant à extraire de l'huile à partir de matière végétale.**
Verfahren zur Extraktion von Öl aus ölhaltigen vegetabilen Stoffen
Device for extracting oil from vegetable products

(30) Priorité: 21.09.2006 FR 0653864
(43) Date de publication de la demande: 26.03.2008
(73) Titulaire: Montagnon, Francois, 13100 Aix en Provence (FR)
(72) Inventeur: Montagnon, Francois, 13100 Aix en Provence (FR)
(74) Mandataire: Portal, Gérard

(56) Documents cités:
- WO-A-99/61568
- FR-A- 581 844
- FR-A- 2 537 499
- US-A- 2 757 696

## Description

La présente invention concerne essentiellement un appareil servant à extraire de l'huile à partir de matière végétale.

### ETAT DE LA TECHNIQUE

Un appareil d'extraction d'huile d'olive, d'arachide, etc est connu du document FR 581844. Celui-ci comporte un broyeur à noix fixe et mobile, des conduits dans lesquels une matière végétale broyée descend, ainsi que deux plateaux compresseurs mis en mouvement par un piston alimenté d'air comprimé. Cet appareil d'extraction d'huile d'olive, d'arachide, etc. présente non seulement l'inconvénient d'être difficile à nettoyer et à entretenir après son utilisation tant au niveau du broyeur qu'au niveau des plateaux compresseurs ; mais aussi l'inconvénient de ne pas obtenir l'huile végétale seule. De plus, cet appareil nécessite l'emploi d'air comprimé et donc d'une installation secondaire sans laquelle l'appareil ne peut fonctionner.

### BUTS DE L'INVENTION

L'invention a pour but principal de résoudre les problèmes précités, c'est-à-dire de fournir un appareil de conception simple et peu encombrant, permettant d'obtenir et d'isoler une huile végétale seule. La présente invention a aussi pour but principal de réaliser un appareil facile à entretenir dont l'utilisation ne nécessite aucun dispositif particulier à mettre en place au préalable. De plus, l'appareil selon l'invention présente l'avantage d'être utilisable à l'échelle industrielle et commerciale, de manière sûre et fiable et sa structure simple permet d'obtenir un appareil de fabrication peu coûteux.

### RESUME DE L'INVENTION

L'invention résout l'ensemble des problèmes techniques ci-dessus, d'une manière sûre et fiable, utilisable à l'échelle industrielle et commerciale.

Ainsi, selon un premier aspect, l'invention fournit un appareil servant à extraire de l'huile végétale à partir de matière végétale, tel que revendiqué dans les revendications 1 à 15, et comprenant un boîtier dans lequel est monté successivement ou alternativement au moins un pressoir et un broyeur ; et comprenant au moins un décanteur, présent dans le boîtier ; et des moyens de commande du broyeur et du pressoir permettant un déplacement forcé de la matière végétale, au moins une partie des moyens de commandes et au moins une partie du broyeur et/ou du pressoir étant démontables pour commander successivement le broyeur et le pressoir.

Selon un mode de réalisation avantageux de l'invention, un des moyens de commande est un moyen unique d'actionnement simplifiant la conception de l'appareil, tel qu'un mécanisme manuel ou motorisé, qui peut coopérer soit avec le broyeur, soit avec le pressoir.

Selon une variante particulière de l'invention, la coopération entre le mécanisme manuel ou motorisé et le broyeur ou le pressoir peut s'effectuer par l'entraînement d'un des moyens de commande correspondant à un moyen de déplacement, tel qu'une vis sans fin ou une tige filetée.

Selon un autre mode de réalisation avantageux de l'invention, le moyen unique d'actionnement du broyeur et du pressoir correspond à un mécanisme manuel composé d'une manivelle et d'au moins un mécanisme d'entraînement tel qu'une roue servant à entraîner un moyen de déplacement, tel qu'une vis sans fin, ou tige filetée, du broyeur et/ou du pressoir.

Selon encore un autre mode de réalisation avantageux de l'invention, le mécanisme d'entraînement comprend un moyen de couplage provisoire avec un moyen de déplacement constitué soit d'une vis sans fin ou tige filetée du broyeur, soit d'une vis sans fin ou tige filetée du pressoir.

Selon un mode de réalisation particulier de l'invention, le moyen de couplage comprend deux pignons coniques entraînant une bague méplatée.

Selon une variante de réalisation de l'invention, le mécanisme manuel est réalisé au moins en partie en acier usiné ou en pièce de fonderie.

Selon une variante de réalisation particulière de l'invention, l'appareil est muni d'au moins un système de sécurité, de préférence d'un système permettant de bloquer un ou plusieurs moyen(s) de commande, tel qu'un ou des mécanisme(s) motorisé(s) lorsque l'appareil n'est pas correctement monté et fermé.

Selon un mode de réalisation avantageux de l'invention, le broyeur est un broyeur à vis sans fin, ladite vis étant de préférence conique, afin d'entraîner la matière végétale vers le bas.

Selon un autre mode de réalisation avantageux de l'invention, le broyeur comprend au moins un moyen de broyage, tel qu'un couteau muni d'au moins une lame, de préférence d'un couteau à trois ou quatre lames.

Selon encore un autre mode de réalisation avantageux de l'invention, le broyeur comprend au moins une grille perforée, de préférence au moins deux grilles présentant des diamètres de perforation différents, chaque grille étant séparée d'une autre par un moyen de broyage tel qu'un couteau.

Selon une variante de réalisation particulièrement avantageuse de l'invention, le broyeur comporte trois grilles présentant des diamètres de perforation différents et deux couteaux avec un nombre de lames différent, lesdites grilles étant disposées en alternance avec lesdits couteaux.

Selon un mode de réalisation avantageux de l'invention, le broyeur comprend un récipient ou bac récepteur de la matière végétale permettant de contenir la matière végétale à broyer.

Selon un autre mode de réalisation avantageux de l'invention, le broyeur comprend un système de fixation, tel qu'une traverse de maintien, venant coopérer avec un récipient ou bac récepteur de la matière végétale et/ou un moyen de déplacement constitué par la vis sans fin ou tige filetée et assurant un maintien en place dudit moyen de déplacement.

Selon encore un autre mode de réalisation avantageux de l'invention, le système de fixation est constitué d'une traverse de maintien et d'un ressort.

Selon une variante de réalisation particulière, chaque composant du broyeur, tel que la vis sans fin, le ou les couteau(x), la ou les grille(s), le bac récepteur de la matière végétale, le système de fixation ou de guidage, est réalisé soit en inox alimentaire soit en matière plastique rigide qui présente l'avantage de pouvoir être moulée.

Selon un mode de réalisation de l'invention, le boîtier comprend un réservoir de réception de la matière végétale broyée et/ou pressée, de préférence comprenant au moins une paroi perforée servant à une filtration de l'huile végétale recherchée et constituant alors le décanteur précité.

Selon un autre mode de réalisation de l'invention, le réservoir de réception de la matière végétale constitue un tamis ayant la forme d'un récipient de géométrie quelconque, de préférence cylindrique, cubique, présentant une ouverture par le haut, une base ou fond non perforé(e) et une ou des paroi(s) perforée(s), en particulier présentant des orifices d'environ 5 microns de diamètre, permettant au moins la filtration de l'huile végétale recherchée.

Selon encore un autre mode de réalisation de l'invention, le pressoir comprend un plateau montable et/ou démontable monté après actionnement du broyeur, dont le déplacement est commandé par un ou des moyen(s) de commande comprenant au moins un moyen de déplacement et au moins un moyen de blocage.

Selon un mode de réalisation avantageux de l'invention, le plateau se déplace en translation à l'aide d'un moyen de déplacement constitué par une tige filetée dont une extrémité est prise dans l'épaisseur du fond du tamis, ledit plateau venant se visser sur l'autre extrémité libre de ladite tige et comprenant un moyen de blocage permettant à la fois de maintenir l'extrémité de la tige filetée prise dans l'épaisseur du fond du tamis et de visser le plateau.

Selon un mode de réalisation particulier de l'invention, le plateau comporte au moins une encoche permettant au plateau d'être disposé et/ou vissé correctement en haut du tamis.

Selon un autre mode de réalisation particulier, chaque composant du pressoir, tel que le tamis, le plateau, la tige filetée, est réalisé soit en inox alimentaire soit en plastique alimentaire.

Selon un autre mode de réalisation avantageux de l'invention, un outil de montage ou démontage du plateau du pressoir peut se solidariser temporairement avec un moyen de déplacement en translation du plateau, tel qu'en tête d'une vis sans fin ou tige filetée.

Selon encore un autre mode de réalisation avantageux de l'invention, l'outil de montage ou de démontage du plateau du pressoir pouvant se solidariser temporairement correspond à une poignée comportant une bague méplatée qui peut se fixer sur la tige filetée prise dans l'épaisseur du fond du tamis pour permettre d'enlever l'ensemble du pressoir après son utilisation.

Selon un mode de réalisation particulier de l'invention, ladite poignée est réalisée en bois, résine, acier ou plastique.

Selon un mode de réalisation avantageux de l'invention, le réservoir de réception sert de décanteur et présente un diamètre inférieur au diamètre du boîtier pour définir une chambre de réception ou décantation au moins de la phase liquide filtrée.

Selon un autre mode de réalisation avantageux de l'invention, le réservoir de réception sert à la fois de décanteur et de pressoir.

Selon encore un autre mode de réalisation particulier, le décanteur formé par la combinaison du boîtier et du réservoir de réception est muni d'au moins un moyen de vidange, de préférence réalisé sur le fond du boîtier, permettant de séparer une phase huileuse d'une phase aqueuse ou de séparer une phase aqueuse d'une phase huileuse.

Selon une variante de réalisation de l'invention, le moyen de vidange correspond à un robinet.

Selon une autre variante de réalisation de l'invention, le décanteur est muni d'une poignée et/ou d'un bec verseur.

Selon encore une autre variante de réalisation de l'invention, le décanteur présente des graduations de mesure indiquant la quantité de liquide.

Selon un mode de réalisation particulier de l'invention, le décanteur est réalisé en inox alimentaire ou verre.

Selon un mode de réalisation avantageux de l'invention, le boîtier comprend un socle coopérant avec un corps latéral définissant une chambre de réception en partie du broyeur et/ou du pressoir et de la matière végétale.

Selon un autre mode de réalisation avantageux de l'invention, le corps latéral constitue un support de maintien du broyeur.

Selon un mode de réalisation particulier de l'invention, le socle est réalisé en matériau essentiellement non extensible, tel que le bois, la résine, l'acier ou encore le plastique.

Selon un mode de réalisation avantageux de l'invention, la matière végétale est choisie parmi le groupe consistant de fruits à coques ligneuses, de pépins, et de drupes oléifères entières comprenant des peaux, de la pulpe et des noyaux contenant des amandes.

Selon un autre mode de réalisation avantageux de l'invention, les drupes oléifères entières sont des olives entières fraîches, ou des avocats entiers frais.

Selon encore un autre mode de réalisation avantageux de l'invention, seule l'amande des drupes ou fruits à coques ligneuses, tel que les cerneaux de noix, est utilisé pour fabriquer de l'huile.

Selon un deuxième aspect, l'invention couvre aussi un procédé d'extraction d'huile végétale à partir de matière végétale, tel que revendiqué dans les revendications 16, 17, et caractérisé en ce qu'il comprend :
a) un broyage des matières végétales effectué à l'aide d'un broyeur précédemment défini commandé par des moyens de commande du broyeur,
b) un démontage d'au moins une partie des moyens de commande du broyeur,
c) une mise en place de ladite au moins une partie des moyens de commande du broyeur sur un pressoir tel que précédemment défini,
d) un pressage des matières végétales broyées et une filtration simultanée permettant de séparer un gâteau ou tourteau constitué par les résidus des matières végétales broyées et pressées, un liquide aqueux et huileux résultant du pressage, lesdites opérations de pressage et de filtration étant effectuées à l'aide dudit pressoir commandé par des moyens de commande du pressoir,
e) une décantation de la phase huileuse et aqueuse effectuée à l'aide d'un décanteur précédemment défini,
f) séparation de la phase huileuse et de la phase aqueuse après décantation.

Selon un mode de réalisation avantageux de l'invention, le procédé est utilisé sur des matières végétales comme précédemment définies.

Selon un troisième aspect, l'invention couvre encore l'utilisation de l'appareil précédemment défini servant à extraire de l'huile végétale à partir de matière végétale dans le domaine des appareils de préparation culinaire, tel que revendiqué dans la revendication 18.

L'invention telle que précédemment définie et telle que résultant de la description des figures ci-après représentant un mode de réalisation actuellement préféré de l'invention, permet de résoudre les problèmes techniques précédemment énoncés dans les buts de l'invention et permet donc de réaliser un appareil servant à extraire de l'huile végétale à partir de matière végétale, de manière sûre et fiable, utilisable à l'échelle industrielle et commerciale. En particulier, l'appareil est entièrement démontable et peut être facilement nettoyé.

D'autres buts, caractéristiques et avantages de l'invention apparaîtront clairement à la lumière de la description explicative qui va suivre, faite en référence au mode de réalisation actuellement préféré de l'invention, faisant partie intégrante de l'invention mais donné simplement à titre d'illustration et qui ne saurait en aucune façon limiter la portée de l'invention.

### DESCRIPTION DES FIGURES

- La figure 1 représente une vue en coupe longitudinale de l'appareil servant à extraire de l'huile à partir de matière végétale selon la présente invention et selon un mode de réalisation actuellement préféré ;
- La figure 2 correspond à une vue en coupe longitudinale du broyeur pris dans son ensemble et du moyen unique d'actionnement constitué ici par un mécanisme manuel présentant une manivelle, un mécanisme d'entraînement, ainsi qu'un moyen de couplage ;
- La figure 3 représente une vue éclatée selon la flèche III des moyens de broyage et des grilles perforées du broyeur.
- La figure 4 représente une vue en coupe longitudinale du décanteur formé par la combinaison du boîtier et du réservoir de réception de la matière végétale broyée et des éléments constituant le pressoir, tels qu'un plateau et des moyens de déplacement et de blocage, ledit pressoir étant muni du moyen unique d'actionnement constitué ici par le mécanisme manuel présentant une manivelle, un mécanisme d'entraînement, ainsi qu'un moyen de couplage ;
- La figure 5 correspond à une vue en coupe longitudinale du décanteur comme précédemment décrit présentant un moyen de déplacement en translation du plateau, ici une tige filetée, sur lequel vient se solidariser temporairement un outil de montage ou démontage du plateau du pressoir, tel qu'ici une poignée.
- La figure 6 représente une vue en coupe transversale selon l'axe VI-VI du décanteur et du pressoir.

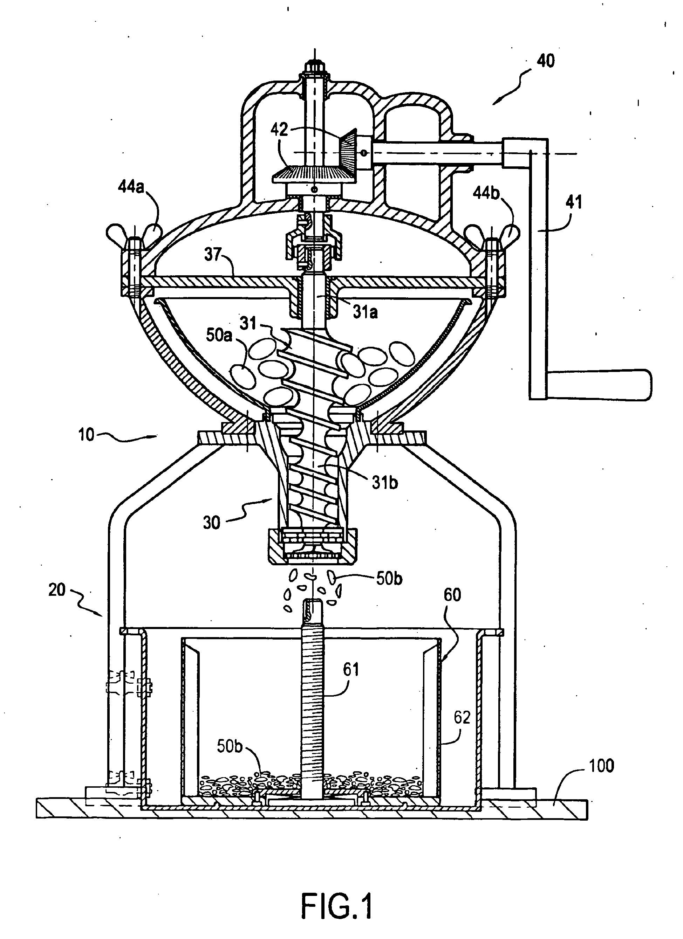

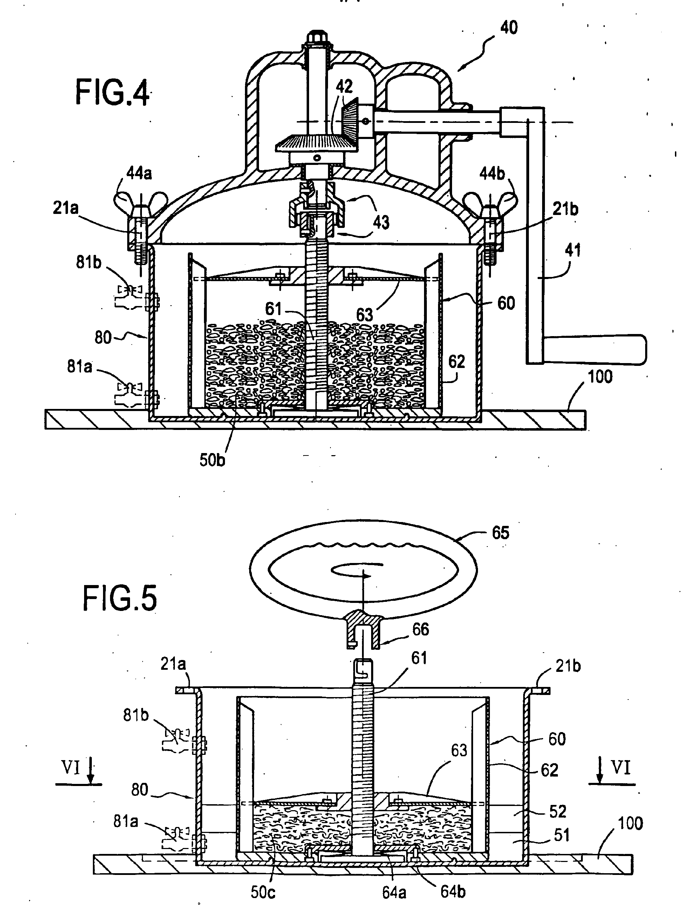

En référence aux figures 1 à 6, on a représenté un mode de réalisation actuellement préféré d'un appareil 10 servant à extraire de l'huile à partir de matière végétale.

Comme illustré dans la figure 1, l'appareil 10 servant à extraire de l'huile à partir de matière végétale comprend un boîtier 20 dans lequel est monté successivement un broyeur 30 et un pressoir 60 comprenant une vis sans fin 31b montée d'une tige 31a ; ainsi qu'un décanteur 80, de préférence présent dans le boîtier 20 et au moins un moyen de commande 31a, 31b, 40, 61, 64a, 64b du broyeur 30 et du pressoir 60 permettant un déplacement forcé de la matière végétale, de préférence au moins une partie des moyens de commandes 31a, 31b, 40, 61, 64a, 64b et au moins une partie du broyeur 30 et/ou du pressoir 60 étant démontables pour commander successivement le broyeur 30 et le pressoir 60.

L'un des moyens de commande est un moyen unique d'actionnement 40 simplifiant la conception de l'appareil. Celui-ci correspond à un mécanisme manuel 40 qui peut coopérer avec un moyen de déplacement 31a, 31b, 61, tel qu'une vis sans fin 31 du broyeur 30 ou une tige filetée 61 du pressoir 60.

Ledit mécanisme manuel 40 est composé d'une manivelle 41 et d'au moins un mécanisme d'entraînement 42, ici deux pignons coniques 42 permettant d'entraîner la rotation d'un moyen de couplage provisoire 43, tel que dans le cas présent une bague méplatée 43 et de manière simultanée un moyen de déplacement, ici, soit la vis sans fin 31 du broyeur 30, soit la tige filetée du pressoir prise dans le moyen de couplage provisoire 43.

Ce moyen unique d'actionnement 40 est équipé d'un système de fermeture, ici constitué par deux vis 44a, 44b venant s'insérer soit à la fois dans des orifices 45a, 45b du mécanisme manuel 40, dans des orifices 37a, 37b d'un système de fixation décrit ci-après disposé entre le mécanisme manuel et le broyeur ainsi que dans des orifices 39a, 39b du broyeur, soit à la fois dans des orifices 45a, 45b du mécanisme manuel 40 et dans des orifices 21a, 21b du boîtier.

On peut aussi prévoir que le moyen unique d'actionnement 40 peut être réalisé sous la forme d'un mécanisme motorisé et prévoir un système de sécurité permettant de bloquer un ou plusieurs moyen(s) de commande, tel qu'un ou des mécanisme(s) motorisé(s) lorque l'appareil n'est pas correctement monté et fermé.

Le mécanisme manuel 40 peut être réalisé au moins en partie en acier usinée ou en pièce de fonderie.

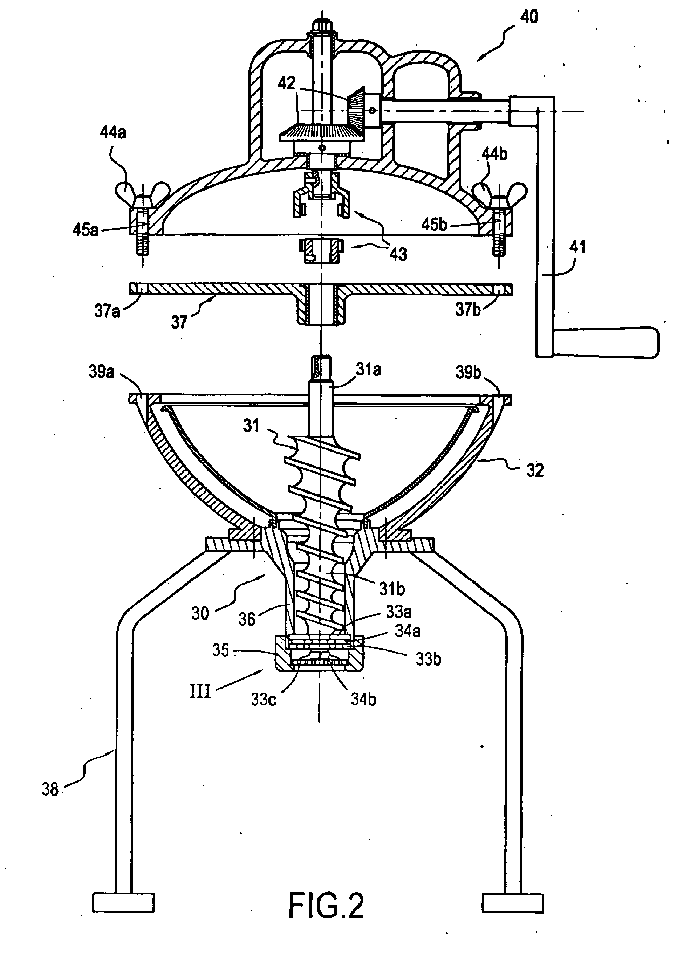

Dans un premier temps, l'appareil 10 représenté aux figures 1 et 2 fait intervenir essentiellement sa partie supérieure constituée par ledit mécanisme manuel 40 précédemment décrit et le broyeur 30.

Ledit broyeur 30 comprend un système de fixation 37, constitué ici d'une traverse de maintien et d'un ressort, venant coopérer avec un récipient ou bac récepteur 32 de la matière végétale et un moyen de déplacement constitué par une tige 31a de la vis sans fin 31b du broyeur ; et assurant ainsi un maintien en place de ladite vis sans fin 31. Ledit système de fixation 37 est disposé entre le broyeur 30 et le moyen d'actionnement unique 40. On notera que la vis sans fin 31 comporte deux parties distinctes à savoir une partie supérieure constituant la tige 31a lisse et une partie inférieure constituant une vis conique.

De plus, le broyeur est muni de corps latéraux 38, ici de trois pieds 38a, 38b, 38c, situés à 120° les uns des autres, permettant au broyeur de rester stable en position verticale. Ledit corps latéral 38 constitue donc un support de maintien dudit broyeur 30.

Des olives entières fraîches 50a peuvent être introduites dans l'appareil 10 soit directement dans le bac récepteur 32 du broyeur 30, soit par une ouverture simple ou une cheminée, non représentée ici, dudit mécanisme manuel 40, ladite ouverture simple ou cheminée étant située dans une zone ne venant pas gêner le fonctionnement dudit mécanisme manuel. Le bac récepteur 32 du broyeur, illustré aux figures 1 et 2, présente la particularité d'être montable ou démontable et est muni d'une double paroi. Cependant, il faut noter qu'il peut aussi être réalisé avec une seule paroi montable ou démontable.

Après avoir placé les olives entières fraîches 50a dans le bac récepteur 32 du broyeur ainsi que le système de fixation 37 du broyeur et le moyen d'actionnement 40, les olives 50a sont prêtes à broyer et le mécanisme manuel peut être utilisé. La vis sans fin 31 du broyeur, ici conique, assure l'approvisionnement des olives 50a vers des organes de broyage, illustrés aux figures 1 à 3, composés de plusieurs moyens de broyage 34a, 34b, ici deux couteaux 34a, 34b et de trois grilles perforées 33a, 33b, 33c présentant des diamètres de perforation différents.

Dans ce mode de réalisation préféré de l'invention, les couteaux 34a, 34b et grilles 33a, 33b, 33c sont disposés alternativement de sorte que chaque couteau 34a, 34b soit pris en sandwich entre deux grilles 33a, 33b, 33c et de manière à ce que les grilles ayant de gros diamètres 33a de perforation et les couteaux 34a comportant moins de lames soient placés en amont de l'extrémité de la vis sans fin et que les grilles 33c ayant des diamètres plus petits de perforation et les couteaux 34b comportant un plus grand nombre de lames soient placés en aval de l'extrémité de la vis sans fin 31.

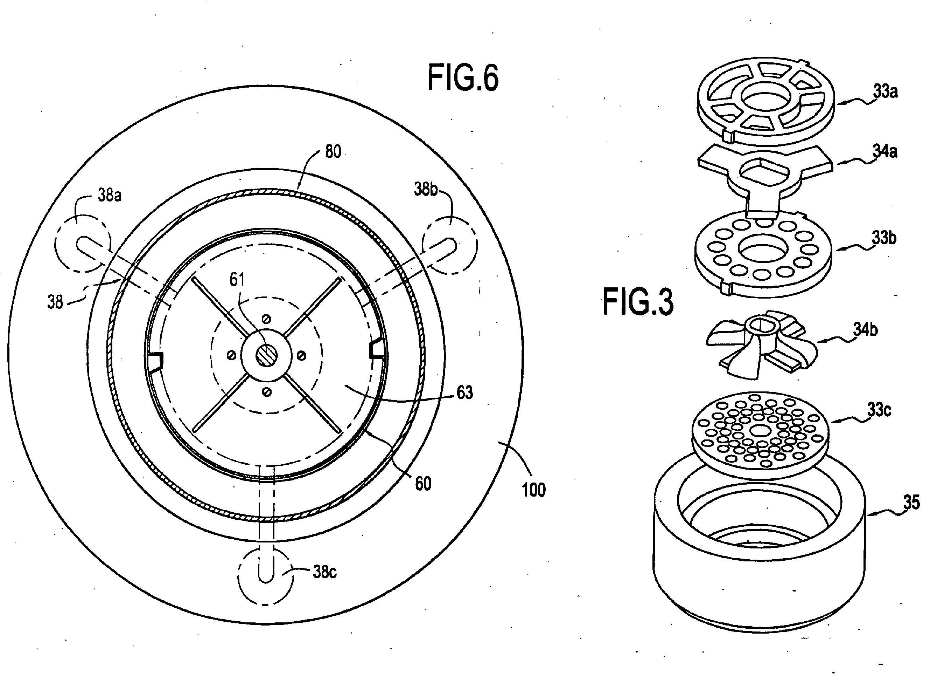

Ici, la figure 3 montre bien que la grille 33a ayant le plus gros diamètre de perforation se situe en amont de l'extrémité de la vis sans fin ainsi que le couteau 34a ayant le moins de lames, ici un couteau à trois lames 34a et que la grille 33c ayant le plus petit diamètre de perforations et le couteau 34b à quatre lames sont situés en aval. Une telle disposition des grilles 33a, 33b, 33c et des couteaux 34a, 34b permet de broyer progressivement la matière végétale, ici les olives entières fraîches, en réduisant la taille de la matière végétale broyée.

Les grilles et couteaux coopèrent avec la vis sans fin 31 à l'aide d'un élément de maintien 35 qui permet de garder plaquer ces grilles 33a, 33b, 33c et couteaux 34a, 34b contre la vis. Cet élément de maintien 35 se fixe par vissage à un élément de logement 36 dans lequel se place la vis 31.

Chaque composant du broyeur 30, tel que la vis concentrique 31, le ou les couteau(x) 34a, 34b, la ou les grille(s) 33a, 33b, 33c, le bac récepteur 32 de la matière végétale, le système de fixation 37 ou de guidage, peut être réalisé soit en inox alimentaire soit en matière plastique rigide qui présenta l'avantage de pouvoir être moulée.

Au fur et à mesure du broyage, les olives broyées tombent dans un boîtier 20 et plus précisément dans un réservoir de réception 62 de la matière végétale broyée et/ou pressée, de préférence comprenant au moins une paroi perforée servant à une filtration de l'huile végétale recherchée et constituant un décanteur.

Ledit réservoir de réception 62 constitue ici un tamis 62 ayant la forme d'un récipient de géométrie quelconque, de préférence cylindrique, cubique, présentant une ouverture par le haut, une base ou fond non perforé(e) et une ou des paroi(s) perforée(s), en particulier présentant des orifices d'environ 5 microns de diamètre, permettant au moins la filtration de l'huile végétale recherchée.

Après actionnement du broyeur et une fois que toutes les olives ont été broyées et réunies dans le réservoir de réception 62, le pressoir 60 est muni d'un plateau 63 montable et/ou démontable, dont le déplacement est commandé par plusieurs moyens de commande comprenant au moins un moyen de déplacement 61 et au moins un moyen de blocage 64a, 64b ; puis du moyen unique d'actionnement 40 qu'on fixe à l'aide du système de fermeture précité constitué ici par les deux vis 44a, 44b venant s'insérer soit à la fois dans les orifices 45a, 45b du mécanisme manuel 40 et dans les orifices 21a, 21b du boîtier.

Les olives broyées 50b peuvent enfin être pressées en actionnant le mécanisme manuel 40. En effet, le plateau 63 du pressoir se déplace alors en translation à l'aide d'un moyen de déplacement constitué par la tige filetée 61 du pressoir dont l'extrémité est prise dans l'épaisseur du fond du tamis, ledit plateau 63 venant se visser sur l'autre extrémité libre de ladite tige 61 et comprenant un moyen de blocage 64a, 64b permettant à la fois de maintenir l'extrémité de la tige filetée prise dans l'épaisseur du fond du tamis et de visser le plateau 63.

Le plateau étant usiné ou moulé comporte au moins une encoche, de préférence de 5 mm, permettant au plateau d'être disposé et/ou vissé correctement en haut du tamis, de préférence à environ 2.5 cm du haut du tamis.

Chaque composant du pressoir 60, tel que le tamis 62, le plateau 63, la tige filetée 61, peut être réalisé soit en inox alimentaire soit en plastique alimentaire.

Lors du pressage des olives broyées, une filtration se déroule par la même occasion : le plateau 63 du pressoir vient presser les olives broyées 50b contre le fond du tamis 62. Ledit tamis 62 retient un gâteau ou tourteau, ou encore appelé plus communément grignon, constitué par les résidus des olives broyées et pressées 50c et laisse passer un liquide aqueux et huileux correspondant respectivement aux eaux de végétation ou margines 51 et à l'huile végétale recherchée 52.

Ce liquide aqueux et huileux est alors recueilli dans le boîtier 20 qui présente un diamètre supérieur au diamètre du réservoir de réception 62, ledit réservoir de réception 62 définissant une chambre de réception ou de décantation au moins du liquide aqueux et huileux filtré. Le réservoir de réception 62 sert donc à la fois de pressoir 60 lorsqu'il est muni du plateau 63 et en partie de décanteur 80.

Après les étapes de pressage et de filtration, l'ensemble du pressoir 60 c'est-à-dire le réservoir récepteur 62, le plateau 63 et les moyens de déplacement et de blocage du plateau, tels que la tige filetée 61 et le système bloquant 64a, 64b, peut être retiré à l'aide d'un outil de montage ou de démontage 65 du plateau. Ledit outil de montage ou de démontage 65 du plateau, ici constitué d'une poignée 65 comportant une bague méplatée 66, vient se solidariser temporairement au moyen de déplacement en translation du plateau, ici la tige filetée 61 dont l'une des extrémités est prise dans l'épaisseur du fond du tamis 62 ; et permet ainsi d'enlever l'ensemble du pressoir après son utilisation. Ladite poignée 65 peut être réalisée en bois, résine, acier ou plastique.

Le décanteur 80, pouvant être réalisé en inox alimentaire ou verre, est formé par la combinaison du boîtier 20 et du réservoir de réception 62. De plus, il peut être muni d'au moins un moyen de vidange 81a, 81b réalisé sur une des parois du décanteur 80 à n'importe quelle hauteur du décanteur, mais de préférence dans la partie inférieure du décanteur et de préférence encore au bas du décanteur ou sur le fond du boîtier. Ces moyens de vidange 81a, 81b, permettant de séparer une phase huileuse d'une phase aqueuse ou de séparer une phase aqueuse d'un phase huileuse, correspondent ici à des robinets 81a, 81b.

En outre, on pourrait prévoir de munir le décanteur 80 d'une poignée et/ou d'un bec verseur et de graduations de mesure indiquant la quantité de liquide.

Le boîtier 20 comprend un socle 100 coopérant avec les corps latéraux 38a, 38b, 38c, ici trois pieds, définissant une chambre de réception en partie du broyeur et/ou du pressoir et de la matière végétale. Le socle peut être réalisé en matériau essentiellement non extensible, tel que le bois, la résine, l'acier ou encore le plastique.

L'appareil peut être utilisé pour traiter non seulement des olives entières fraîches mais aussi d'autres drupes oléifères entières comme des avocats entiers frais ou une partie des drupes comme l'amande des drupes ou encore des fruits à coques ligneuses comme les noisettes, amandes, et des pépins.

L'appareil 10 précédemment défini servant à extraire de l'huile végétale à partir de matière végétale est utilisé de préférence dans le domaine des appareils de préparation culinaire.

### EXEMPLE

3,5 kg d'olives entières fraîches 50a sont traitées avec l'appareil 10 décrit précédemment et sont donc soumises successivement au broyage, au pressage et à la filtration, ainsi qu'à la décantation puis séparation des phases huileuse 52 et aqueuse 51. Au final, 0,5 L d'huile d'olive filtrée 52 a été obtenu.

Ainsi, l'invention permet d'obtenir l'appareil précédemment défini servant à extraire et à isoler de l'huile végétale à partir de matière végétale et résout de manière effective les problèmes techniques énoncés. L'appareil selon l'invention présente l'avantage d'être peu compliqué à mettre en oeuvre, d'une part par sa conception de structure simple, d'autre part par son utilisation pratique ne nécessitant aucune installation particulière au préalable et permettant de facilement entretenir l'appareil.

## Revendications

1. Appareil (10) servant à extraire de l'huile végétale à partir de matière végétale (50a) comprenant un boîtier (20) dans lequel est monté successivement ou alternativement au moins un broyeur (30) et un pressoir (60) ; et comprenant au moins un décanteur (80), présent dans le boîtier (20) ; et des moyens de commande (31a, 31b, 40, 61, 64a, 64b) du broyeur (30) et du pressoir (60) permettant un déplacement forcé de la matière végétale, **caractérisé en ce que** au moins une partie des moyens de commandes (31a, 31b, 40, 61, 64a, 64b) et au moins une partie du broyeur (30) et/ou du pressoir (60) sont démontables pour commander successivement le broyeur (30) et le pressoir (60).

2. Appareil (10) selon la revendication 1 **caractérisé en ce qu'**un des moyens de commande est un moyen unique d'actionnement (40) simplifiant la conception de l'appareil, tel qu'un mécanisme manuel (40) ou motorisé, qui peut coopérer soit avec le broyeur (30), soit avec le pressoir (60).

3. Appareil (10) selon la revendication 1 ou 2, **caractérisé en ce que** le moyen unique d'actionnement (40) du broyeur (30) et du pressoir (60) correspond à un mécanisme manuel (40) composé d'une manivelle (41) et d'au moins un mécanisme d'entraînement (42) tel qu'une roue servant à entraîner un des moyens de commande correspondant à un moyen de déplacement (31a, 61), tel qu'une vis sans fin (31), ou tige filetée (61), du broyeur (30) et/ou du pressoir (60).

4. Appareil (10) selon l'une quelconque des revendications 1 à 3, **caractérisé en ce que** le mécanisme d'entraînement (42) comprend un moyen de couplage provisoire (43) avec un moyen de déplacement (31a, 61) constitué soit d'une vis sans fin (31) pu tige filetée du broyeur (30), soit d'une vis sans fin ou tige filetée (61) du pressoir (60).

5. Appareil (10) selon l'une quelconque des revendications 1 à 4, **caractérisé en ce que** le broyeur (30) comprend au moins un moyen de broyage (34a, 34b), tel qu'un couteau (34a, 34b) muni d'au moins une lame, de préférence d'un couteau à trois (34a) ou quatre lames (34b).

6. Appareil (10) selon l'une quelconque des revendications 1 à 5, **caractérisé en ce que** le broyeur (30) comprend au moins une grille perforée (33a, 33b, 33c), de préférence au moins deux grilles (33a, 33b, 33c) présentant des diamètres de perforation différents, chaque grille étant séparée d'une autre par un moyen de broyage (34a, 34b) tel qu'un couteau.

7. Appareil (10) selon l'une quelconque des revendications 1 à 6, **caractérisé en ce que** le broyeur (30) comprend un système de fixation (37), tel qu'une traverse de maintien, venant coopérer avec un récipient ou bac récepteur (32) de la matière végétale et/ou un moyen de déplacement (31a, 31b) comprenant la vis sans fin (31a, 31 b) ou tige filetée du broyeur (30) et assurant un maintien en place dudit moyen de déplacement (31a, 31b).

8. Appareil (10) selon l'une des revendications 1 à 7, **caractérisé en ce que** le boîtier (20) comprend un réservoir de réception (62) de la matière végétale broyée (50b) et/ou pressée (50c), de préférence comprenant au moins une paroi perforée servant à une filtration de l'huile végétale recherchée et constituant alors le décanteur (80) précité.

9. Appareil (10) selon l'une des revendications 1 à 8, **caractérisé en ce que** le pressoir (60) comprend un plateau (63) montable et/ou démontable monté après actionnement du broyeur (30), dont le déplacement est commandé par un ou des moyen(s) de commande (61, 64a, 64b) comprenant au moins un moyen de déplacement (61) et au moins un moyen de blocage (64a, 64b).

10. Appareil (10) selon l'une des revendications 1 à 9, **caractérisé en ce qu'**un outil (65) de montage ou démontage du plateau (63) du pressoir (60) peut se solidariser temporairement avec un moyen de déplacement (61) en translation du plateau, tel qu'en tête d'une vis sans fin ou tige filetée (61).

11. Appareil (10) selon l'une des revendications 8 à 10, **caractérisé en ce que** le réservoir de réception (62) sert de décanteur (80) et présente un diamètre inférieur au diamètre du boîtier (20) pour définir une chambre de réception ou décantation au moins de la phase liquide filtrée (51, 52).

12. Appareil (10) selon l'une des revendications 1 à 11, **caractérisé en ce que** le décanteur (80) formé par la combinaison du boîtier (20) et du réservoir de réception (62) est muni d'au moins un moyen de vidange (81a, 81b), de préférence réalisé sur le fond du boîtier (20), permettant de séparer une phase huileuse (52) d'une phase aqueuse (51) ou de séparer une phase aqueuse (51) d'une phase huileuse (52).

13. Appareil (10) selon l'une des revendications 1 à 11, **caractérisé en ce que** le boîtier (20) comprend un socle (100) coopérant avec un corps latéral (38a, 38b, 38c) définissant une chambre de réception en partie du broyeur (30) et/ou du pressoir (60) et de la matière végétale.

14. Appareil (10) selon l'une des revendications 1 à 13, **caractérisé en ce que** la matière végétale est choisie parmi le groupe consistant de fruits à coques ligneuses, de pépins, et de drupes oléifères entières (50a) comprenant des peaux, de la pulpe et des noyaux contenant des amandes.

15. Appareil (10) selon la revendication 14, **caractérisé en ce que** les drupes oléifères entières sont des olives entières fraîches (50a), ou des avocats entiers frais.

16. Procédé d'extraction d'huile végétale à partir de matière végétale (50a), **caractérisé en ce qu'**il comprend :
a) un broyage des matières végétales (50a) effectué à l'aide d'un broyeur (30), commandé par des moyens de commande (31a, 31b, 40) du broyeur (30), tel que défini selon l'une quelconque des revendications 1 à 15,
b) un démontage d'au moins une partie des moyens de commande (40) du broyeur (30),
c) mise en place de ladite au moins une partie des moyens de commande (40) du broyeur (30) sur un pressoir (60) tel que défini selon l'une quelconque des revendications 1 à 15,
d) un pressage des matières végétales broyées (50b) et une filtration simultanée permettant de séparer un gâteau ou tourteau constitué par les résidus des matières végétales broyées et pressées (50c), un liquide aqueux (51) et huileux (52) résultant du pressage, lesdites opérations de pressage et de filtration étant effectuées à l'aide dudit pressoir (60) commandé par des moyens de commande (40, 61, 64a, 64b) du pressoir (60),
e) une décantation de la phase huileuse (52) et aqueuse (51) effectuée à l'aide d'un décanteur (80) selon l'une quelconque des revendications 1 à 15,
f) séparation de la phase huileuse (52) et de la phase aqueuse (51) après décantation.

17. Procédé selon la revendication 16, **caractérisé en ce qu**'il est utilisé sur des matières végétales selon la revendication 14 ou 15.

18. Utilisation de l'appareil (10) servant à extraire de l'huile végétale à partir de matière végétale selon l'une quelconque des revendications 1 à 15 dans le domaine des appareils de préparation culinaire.

## Claims

1. An appliance (10) serving to extract vegetable oil from vegetable matter (50a), the appliance comprising a housing (20) having mounted therein in succession or in alternation at least one grinder (30) and at least one press (60); and including at least one settling tank (80) present in the housing (20); and control means (31a, 31b, 40, 61, 64a, 64b) for controlling the grinder (30) and the press (60) enabling the vegetable matter to be moved under force, the appliance being **characterized in that** at least some of the control means (31a, 31b, 40, 61, 64a, 64b) and at least part of the grinder (30) and/or the press (60) are capable of being dismantled to control operation of the grinder (30) and of the press (60) in succession.

2. An appliance (10) according to claim 1, **characterized in that** one of the control means is a single actuator means (40) simplifying the design of the appliance, such as a motor-driven or manual mechanism (40) capable of co-operating either with the grinder (30) or with the press (60).

3. An appliance (10) according to claim 1 or claim 2, **characterized in that** the single actuator means (40) of the grinder (30) and or the press (60) corresponds to a manual mechanism (40) made up of a hand crank (41) and at least one drive mechanism (42) such as a wheel serving to drive one of the control means corresponding to a movement means (31a, 61) such as a wormscrew (31) or a threaded rod (61), of the grinder (30) and/or of the press (60).

4. An appliance (10) according to any one of claims 1 to 3, **characterized in that** the derive mechanism (42) includes temporary coupling means (43) for coupling with a movement means (31a, 61) constituted either by a wormscrew (31) or a threaded rod of the grinder (30), or by a wormscrew or a threaded rod (61) of the press (60).

5. An appliance (10) according to any one of claims 1 to 4, **characterized in that** the grinder (30) includes at least one grinder means (34a, 34b), such as a knife (34a, 34b) provided with at least one blade, preferably a knife having three blades (34a) or four blades (34b).

6. An appliance (10) according to any one of claims 1 to 5, **characterized in that** the grinder (30) includes at least one perforated grid (33a, 33b, 33c), preferably at least two grids (33a, 33b, 33c) presenting perforations of different diameters, each grid being separated from another by a grinder means (34a, 34b) such as a knife.

7. An appliance (10) according to any one of claims 1 to 6, **characterized in that** the grinder (30) includes a fastener system (37), such as a supporting cross-member that co-operates with a receptacle or receiver tray (32) for receiving the vegetable matter and/or a movement means (31a, 31b) comprising the wormscrew (31a, 31b) or threaded rod of the grinder (30), and serving to hold said movement means (31a, 31b) in place.

8. An appliance (10) according to any one of claim 1 to 7, **characterized in that** the housing (20) includes a receiver tank (62) for receiving the ground (50b) and/or pressed (50c) vegetable matter, preferably including at least one perforated wall serving to filter the looked-for vegetable oil and thus constituting the above-specified settling tank (80).

9. An appliance (10) according to any one of claims 1 to 8, **characterized in that** the press (60) includes a plate (63) that is mountable and/or dismountable, and that is mounted after the grinder (30) has been actuated, movement thereof being controlled by one or several control means (61, 64a, 64b) including at least one movement means (61) and at least one blocking means (64a, 64b).

10. An appliance (10) according to any one of claims 1 to 9, **characterized in that** a tool (65) for mounting or dismounting the plate (63) of the press (60) may be secured temporarily with a movement means (61) for moving the plate in translation, such as at the head of a wormscrew or threaded rod (61).

11. An appliance (10) according to any one of claims 8 to 10, **characterized in that** the receiver tank (62) serves as a settling tank (80) and presents a diameter that is smaller than the diameter of the housing (20), so as to define a chamber for receiving or settling at least the filtered liquid phase (51, 52).

12. An appliance (10) according to any one of claims 1 to 11, **characterized in that** the settling tank (80) formed by the combination of the housing (20) and the receiver tank (62) is provided with at least one emptying means (81a, 81b), preferably constituted by the bottom of the housing (20), enabling an oily phase (52) to be separated form an aqueous phase (51) or an aqueous phase (51) to be separated form an oily phase (52).

13. An appliance (10) according to any one of claims 1 to 11, **characterized in that** the housing (20) includes a base (100) co-operating with a lateral body (38a, 38b, 38c) defining a reception chamber for receiving part of the grinder (30) and/or of the press (60), and the vegetable matter.

14. An appliance (10) according to any one of claims 1 to 13, **characterized in that** the vegetable matter is selected from the group comprising fruit with ligneous shells (nuts), seeds, and whole oil-bearing drupes (50a) comprising skins, pulp, and stones containing kernels.

15. An appliance (10) according to claim 14, **characterized in that** the whole oil-bearing drupes are fresh whole olives (50a), or fresh whole avocados.

16. A method of extracting vegetable oil from vegetable matter (50a), the method being **characterized in that** it comprises:
a) grinding the vegetable matter (50a) with the help of a grinder (30) controlled by control means (31a, 31b, 40) for the grinder (30), as defined in any one of claims 1 to 15;
b) dismounting at least part of the control means (40) for the grinder (30);
c) installing said at least one portion of the control means (40) for the grinder (30) on a press (60) as defined in any one of claims 1 to 15;
d) pressing the ground vegetable matter (50b) and simultaneously filtering it enabling an oil-cake constituted by the residue (50c) of the ground and pressed vegetable matter to be separated from an aqueous and oily liquid (51 and 52) resulting from the pressing, said dressing and filtering operations being performed with the help of said press (60) controlled by the control means (40, 61, 64a, 64b) for the press (60);
e) settling the oily phase (52) and the aqueous phase (51) with the help of a settling tank (80) according to any one of claims 1 to 15; and
f) separating the oily phase (52) from the aqueous phase (51) after settling.

17. A method according to claim 16, **characterized in that** it is used on vegetable matter according to claim 14 or claim 15.

18. The use of the appliance (10) for extracting vegetable oil from vegetable matter according to any one of claims 1 to 15 in the field of kitchen appliances.

## Patentansprüche

1. Gerät (10) zum Extrahieren von Pflanzenöl aus Pflanzenmaterial (50a), umfassend ein Gehäuse (20), in dem nacheinander oder abwechselnd wenigstens ein Zerkleinerer (30) und eine Presse (60) angebracht ist, und wenigstens einen Absetzbehälter (80), welcher in dem Gehäuse (20) vorhanden ist, sowie Mittel zum Betätigen (31a, 31b, 40, 61, 64a, 64b) des Zerkleinerers (30) und der Presse (60), die eine Zwangsbewegung des Pflanzenmaterials ermöglichen, **dadurch gekennzeichnet, daß** wenigstens ein Teil der Betätigungsmittel (31 a, 31 b, 40, 61, 64a, 64b) und wenigstens ein Teil des Zerkleinerers (30) und/oder der Presse (60) demontierbar sind, um den Zerkleinerer (30) und die Presse (60) nacheinander zu betätigen.

2. Gerät (10) nach Anspruch 1, **dadurch gekennzeichnet, daß** eines der Betätigungsmittel ein die Gestaltung des Gerätes vereinfachendes einziges Betätigungsmittel (40), wie ein manueller Mechanismus (40) oder motorisierter Mechanismus ist, das entweder mit dem Zerkleinerer (30) oder mit der Presse (60) zusammenwirken kann.

3. Gerät (10) nach Anspruch 1 oder 2, **dadurch gekennzeichnet, daß** das einzige Betätigungsmittel (40) des Zerkleinerers (30) und der Presse (60) einem manuellen Mechanismus (40) entspricht, welcher aus einer Kurbel (41) und aus wenigstens einem Antriebsmechanismus (42), wie einem Rad zum Antreiben von einem der Betätigungsmittel besteht, das einem Bewegungsmittel (31a, 61), wie einer Schnecke (31) oder Gewindestange (61), des Zerkleinerers (30) und/oder der Presse (60) entspricht.

4. Gerät (10) nach einem der Ansprüche 1 bis 3, **dadurch gekennzeichnet, daß** der Antriebsmechanismus (42) ein Mittel zur vorläufigen Kopplung (43) mit einem Bewegungsmittel (31a, 61) umfaßt, das entweder von einer Schnecke (31) oder Gewindestange des Zerkleinerers (30) oder von einer Schnecke oder Gewindestange (61) der Presse (60) gebildet ist.

5. Gerät (10) nach einem der Ansprüche 1 bis 4, **dadurch gekennzeichnet, daß** der Zerkleinerer (30) wenigstens ein Zerkleinerungsmittel (34a, 34b), wie ein mit wenigstens einer Klinge versehenes Messer (34a, 34b), vorzugsweise ein Messer mit drei (34a) oder vier Klingen (34b) umfaßt.

6. Gerät (10) nach einem der Ansprüche 1 bis 5, **dadurch gekenntzeichnet, daß** der Zerkleinerer (30) wenigstens ein perforiertes Gitter (33a, 33b, 33c), vorzugsweise wenigstens zwei Gitter (33a, 33b, 33c) mit unterschiedlichen Perforationsdurchmessern umfaßt, wobei jedes Gitter durch ein Zerkleinerungsmittel (34a, 34b), wie ein Messer, von einem anderen getrennt ist.

7. Gerät (10) nach einem der Ansprüche 1 bis 6, **dadurch gekennzeichnet, daß** der Zerkleinerer (30) ein Fixiersystem (37), wie eine Haltetraverse umfaßt, die mit einem Behälter oder Gesäß (32) zur Aufnahme des Pflanzenmaterials und/oder mit einem die Schnecke (31a, 31b) oder Gewindestange des Zerkleinerers (30) umfassenden Bewegungsmittel (31 a, 31 b) zusammenwirkt und die ein Fixieren des Bewegungsmittels (31a, 31 b) sicherstellt.

8. Gerät (10) nach einem der Ansprüche 1 bis 7, **dadurch gekennzeichnet, daß** das Gehäuse (20) einen Behälter zur Aufnahme (62) des gemahlenen (50b) und/oder gepreßten (50c) Pflanzenmaterials umfaßt, der vorzugsweise wenigstens eine perforierte Wand, die zu einem Filtern des gewünschten Pflanzenöls dient, aufweist und dann den vorgenannten Absetzbehälter (80) bildet.

9. Gerät (10) nach einem der Ansprüche 1 bis 8, **dadurch gekennzeichnet, daß** die Presse (60) eine anbringbare und/oder abnehmbare Platte (63) umfaßt, die nach Betätigung des Zerkleinerers (30) angebracht wird und deren Bewegung durch ein oder mehrere Betätigungsmittel (61, 64a, 64b), die wenigstens ein Bewegungsmittel (61) sowie wenigstens ein Blockiermittel (64a, 64b) umfassen, gesteuert wird.

10. Gerät (10) nach einem der Ansprüche 1 bis 9, **dadurch gekennzeichnet, daß** ein Werkzeug (65) zum Anbringen oder Abnehmen der Platte (63) der Presse (60) sich mit einem Bewegurgsmittel (61) zur Verschiebebewegung der Platte, wie am oberen Teil einer Schnecke oder Gewindestange (61), vorübergehend fest verbinden kann,

11. Gerät (10) nach einem der Ansprüche 8 bis 10, **dadurch gekennzeichnet, daß** der Aufnahmebehälter (62) als Absetzbehälter (80) dient und einen kleineren Durchmesser als das Gehäuse (20) aufweist, um eine Kammer zum Aufnehmen oder Absetzen wenigstens der gefilterten flüssigen Phase (51, 52) zu definieren.

12. Gerät (10) nach einem der Ansprüche 1 bis 11, **dadurch gekennzeichnet, daß** der Absetzbehälter (80), welcher aus der Kombination von Gehäuse (20) und Aufnahmebehälter (62) besteht, mit wenigstens einem vorzugsweise am Boden des Gehäuses (20) ausgebildeten Entleerungsmittel (81a, 81 b) versehen ist, das die Trennung einer öligen Phase (52) von einer wäßrigen Phase (51) oder die Trennung einer wäßrigen Phase (51) von einer öligen Phase (52) ermöglicht.

13. Gerät (10) nach einem der Ansprüche 1 bis 11, **dadurch gekennzeichnet, daß** das Gehäuse (20) einen Sockel (100) umfaßt, der mit einem Seitenkörper (38a, 38b, 38c) zusammenwirkt, weicher eine Kammer zur teilweisen Aufnahme des Zerkleinerers (30) und/oder der Presse (60) sowie des Pflanzenmaterials definiert.

14. Gerät (10) nach einem der Ansprüche 1 bis 13, **dadurch gekennzeichnet, daß** das Pflanzenmaterial aus der Gruppe bestehend aus Früchten mit holziger Schale, aus Kernen und aus ganzen ölhaltigen Steinfrüchten (50a) mit Haut, Fruchtfleisch und samenenthaltenden Kernen ausgewählt ist.

15. Gerät (10) nach Anspruch 14, **dadurch gekennzeichnet, daß** die ganzen ölhaltigen Steinfrüchte frische ganze Oliven (50a) oder frische ganze Avocados sind.

16. Verfahren zur Extraktion von Pflanzenöl aus Pflanzenmaterial (50a), **dadurch gekennzeichnet, daß** es folgendes umfaßt:
a) ein Zerkleinern des Pflanzenmaterials (50a), das mit Hilfe eines Zerkleinerers (30) vollzogen wird, der über Mittel zur Betätigung (31a, 31b, 40) des Zerkleinerers (30), wie nach einem der Ansprüche 1 bis 15 definiert, betätigt wird,
b) ein Abnehmen wenigstens eines Teils der Mittel zum Betätigen (40) des Zerkleinerers (30),
c) Anbringen des wenigstens einen Teils der Mittel zum Betätigen (40) des Zerkleinerers (30) auf einer Presse (60) wie nach einem der Ansprüche 1 bis 15 definiert,
d) ein Pressen des zerkleinerten Pflanzenmaterials (50b) sowie ein gleichzeitiges Filtern, das ermöglicht, einen Kuchen oder Preßkuchen, welcher von den Resten des zerkleinerten und gepreßten Pflanzenmaterials (50c) gebildet ist, eine aus dem Pressen hervorgehende wäßrige Flüssigkeit (51) und ölige Flüssigkeit (52) zu trennen, wobei die Schritte des Pressens und des Filterns mit Hilfe der Presse (60), welche durch Mittel zum Betätigen (40, 61, 64a, 64b) der Presse (60) betätigt wird, durchgeführt werden,
e) ein Absetzen der öligen Phase (52) und der wäßrigen Phase (51), das mit Hilfe eines Absetzbehälters (80) nach einem der Ansprüche 1 bis 15 durchgeführt wird,
f) Trennen der öligen Phase (52) und der wäßrigen Phase (51) nach dem Absetzen.

17. Verfahren nach Anspruch 16, **dadurch gekennzeichnet, daß** es bei Pflanzenmaterial nach Anspruch 14 oder 15 eingesetzt wird.

18. Verwendung des Gerätes (10) zum Extrahieren von Pflanzenöl aus Pflanzenmaterial nach einem der Ansprüche 1 bis 15 auf dem Gebiet der Geräte zur kulinarischen Zubereitung.
